# EUROPEAN PATENT SPECIFICATION

(11) **EP 3 096 709 B1**
(45) Date of publication and mention of the grant of the patent: **26.06.2019**
(21) Application number: 15705357.0
(22) Date of filing: 16.01.2015
(51) Int. Cl.: A61C 7/08, A61C 7/12, A61C 7/14

(54) **ORTHODONTIC APPARATUS**
ORTHODONTISCHE VORRICHTUNG
APPAREIL ORTHODONTIQUE

(30) Priority: 21.01.2014 GB 201400966
(43) Date of publication of application: 30.11.2016
(73) Proprietor: Inman Aligner Holdings LLC, Coral Springs, Florida 33065 (US)
(72) Inventor: BRADSTOCK-SMITH, Tim, London N6 4ST (GB); QURESHI, Atif, Kent BR6 7QJ (GB); RUSSELL, James, Shrewsbury Shropshire SY3 7AP (GB); INMAN, Donal, Coral Springs, Florida 33065 (US)
(74) Representative: Ablett, Graham Keith
(86) International application number: PCT/GB2015/050093
(87) International publication number: WO 2015/110799

(56) References cited:
- WO-A1-2010/058181
- WO-A2-2009/022986
- US-B1- 6 435 871

## Description

The present invention relates to apparatus for the orthodontic treatment of teeth. In particular, the invention relates to removable orthodontic appliances and components for such appliances.

Orthodontic treatments for correcting problems relating to the anterior teeth, such as cross-bites, overcrowding, and rotated, splayed or flared teeth typically rely on applying forces to the teeth over a period of months to years to slowly move the teeth into their desired positions. Whilst traditional orthodontic treatments generally relied on fixed braces to apply the required forces, it is now increasingly common to use removable appliances to perform the treatment.

As well as giving the patient the option to remove the appliance for short periods of time, for example for photographs, removable appliances also offer improved hygiene compared to fixed devices. For example, the appliance can be removed to allow easy cleaning of both the appliance and the teeth. The appliance can also be removed when the patient is eating to avoid fouling by food particles.

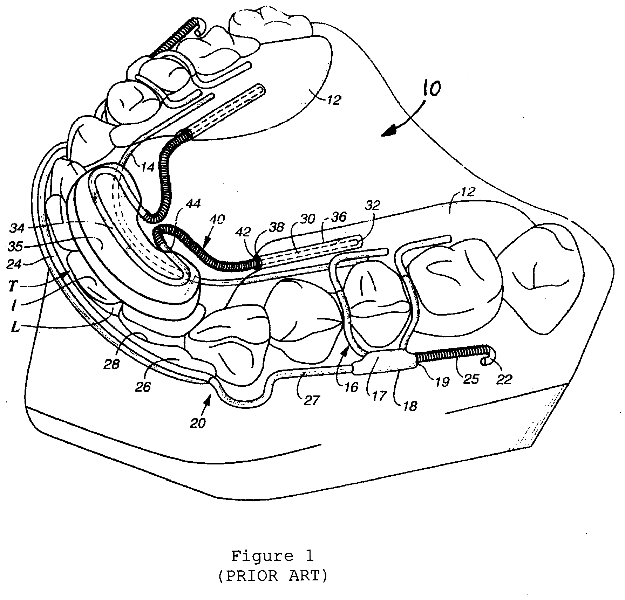

Figure 1 of the accompanying drawings shows one known type of removable orthodontic appliance, marketed under the Registered Trade Mark "Inman Aligner" and described in US Patent No. 6,435,871.

The appliance 10 includes a support structure having a pair of laterally opposed body portions 12 of hardened acrylic. The body portions 12 are connected to one another across the jaw by an arch wire 14. Each body portion 12 is provided with an anchoring device 16, in the form of an Adams clasp or similar device, for engagement with one of the posterior teeth. Part of each anchoring device 16 is embedded in the acrylic of the respective body portion 12, so that the body portions are securely affixed to the anchoring devices 16 and are held in place against the posterior teeth when the engagement members 16 are engaged with the teeth. In the illustrated example, the anchoring devices 16 are engaged with the second bicuspids.

A tubular sleeve 18 is attached to the labial side of each anchoring device 16, by way of a solder joint 17. A labial rod 20 extends between the sleeves 18, across the labial side of the anterior teeth. The labial rod 20 comprises a metal spring wire shaped into a medial labial arch or bow 24 with distally-extending end portions 27. A labial body portion 26 of hardened acrylic is carried by the labial bow 24.

The end portions 27 extend through the sleeves 18 and terminate at a hooked end 22. Coil springs 15 are journaled around the end portions 27 of the labial rod 20, to act between the hooked ends 22 and the rear end 19 of the sleeve 18. In this way, the labial rod 20 is urged in a posterior direction, so that an inner surface 28 of the body portion 26 of the labial rod 20 is biased against the labial surface L of the targeted anterior teeth T.

The appliance 10 also includes a lingual (or palatial) rod 30, having a midsection 34 that carries a hard acrylic lingual body 35, and two generally parallel, distally-extending portions that terminate at ends 32.

A further sleeve 36 is embedded in each of the body portions 12, respectively, of the support structure. Each sleeve 36 has an open end 38 for receiving the distally-extending portions of the lingual rod 30.

The distally-extending portions of the lingual rod 30 are slidably received in and extend into the sleeves 36. Coil springs 40 are journaled about respective parts of the lingual rod 30, so that one end 42 of each spring 40 bears against the open end 38 of the respective sleeve 36, and the other end 44 of each spring 40 bears against a respective side of the lingual body 35. The springs 40 urge the lingual rod 30 in an anterior direction, so that an outside surface of the lingual body 35 is biased against the lingual surfaces I of the targeted anterior teeth T.

The labial rod 20 and lingual rod 30 therefore act in unison against the targeted anterior teeth T in generally opposed directions. The labial rod 20 serves to retract protruding incisor teeth, and the lingual rod 30 serves to procline any retroclined incisor teeth. Rotations of the teeth can also be effected by appropriate shaping of the labial body portion 26 and the lingual body 35. With suitable selection of the spring forces, the targeted teeth T are forced over time into desired positions to achieve an orthodontic correction.

Each appliance of the type shown in Figure 1 is custom-made for each patient. As a result, the appliances are highly customisable, but relatively few components can be manufactured in advance. The appliance is also relatively complex, for example with multiple bends in the lingual rod 20 and labial rod 30 and exposed springs 25, 40. Careful cleaning and handling of the appliance is therefore required to maintain hygiene and comfort during treatment.

Against this background, embodiments of the present invention offer improvements over known removable orthodontic appliances such as that shown in Figure 1.

From an aspect, the present invention resides in an appliance for the orthodontic treatment of one or more anterior teeth in the jaw of a patient, comprising a removable lingual bow having a medial part for engagement with a lingual side of the anterior teeth, and a pair of distal parts extending in a posterior direction from the medial part, a support structure including a pair of laterally opposed body portions, each body portion being provided with an anchoring device for anchoring the respective body portion to one or more posterior teeth, and a sleeve having an open end for receiving a respective one of the distal parts of the lingual bow. A pair of biasing members is housed within the sleeves. The biasing members are arranged to bias the lingual bow in an anterior direction when the lingual bow is fitted to the support structure, and the biasing members are removable through the open ends of the sleeves when the lingual bow is removed from the support structure.

Because the biasing members are housed in the sleeves, the biasing members are protected from the environment of the mouth when the appliance is in use. In this way, the likelihood of the biasing members becoming clogged with calculus, food debris or other matter, is reduced compared to the known appliance of Figure 1. Housing the biasing members within the sleeves in accordance with the aspect of the invention also serves to separate the biasing members from the soft tissues of the patient's mouth, reducing the likelihood of irritation or injury and increasing patient comfort, which in turn improves compliance and therefore contributes to reduced treatment times. Also, the lingual bow can be shaped with relatively sharp bends or curves without affecting the operation of the biasing members, which can increase the range of conditions that can be treated effectively by the appliance of the invention, compared to known devices in which the biasing members are carried on the lingual bow.

Furthermore, because the biasing members can be removed from the open ends of the sleeves when the lingual bow is removed, the biasing members of the appliance can easily be replaced without the need for extensive disassembly or remanufacturing of the device.

In use, the biasing members act to urge the medial part of the lingual bow against the lingual surfaces of the targeted anterior teeth, for example to procline retracted teeth or to rotate misaligned teeth. The force applied to the teeth by the lingual bow depends in turn on the force applied to the lingual bow by the biasing members. Accordingly, with the appliance of the aspect of the invention, the force that acts on the teeth can easily be changed during a course of treatment by replacing the biasing members. In this way, the appliance can be adjusted to optimise its clinical performance.

Preferably, the biasing members are retained in the sleeves by the distal parts of the lingual bow. In this way, the biasing members are held in place in the sleeves whenever the appliance is in use, but the biasing members can be released simply by removal of the lingual bow.

The sleeves may comprise closed ends opposite the open ends. Accordingly, the sleeves may take the form of elongate cups within which the biasing members are received. Each biasing member may be disposed between the closed end of a respective sleeve and an end of the respective distal part of the lingual bow, so that the biasing members act on the distal ends of the distal parts of the lingual bow.

Conveniently, the lingual bow may be shaped by bending the exposed portions of the bow that extend from the medial part to the respective sleeves on each side of the mouth. Unlike in the prior art, these exposed portions do not carry biasing members and can therefore be bent through relatively sharp angles. Also, because the biasing members are concealed, the exposed portions of the lingual rod can be positioned relatively close to the tongue with a reduced risk of the biasing members causing irritation or discomfort.

In one example, when the appliance is used to procline or "tip" retracted anterior teeth, the distal parts of the lingual bow extend in a first plane, and the medial part of the lingual bow is spaced from or offset from the first plane in an incisal direction. In this way, the medial part of the lingual bow can be positioned closer to the incisal edges of the anterior teeth. This increases the turning moment applied to the teeth, thereby decreasing treatment times. The lingual bow may include intermediate parts that connect the medial part to the distal parts, and the intermediate parts may include one or more bends to offset the medial part towards the incisal edges of the anterior teeth.

In one embodiment, the distal parts of the lingual bow comprise rods, and each rod is a sliding fit in the respective sleeve. Preferably, the rods have a circular cross-section, and the sleeves are tubular. The medial part of the lingual bow may also comprise a rod. The distal parts and medial part of the lingual bow may comprise a single arch-shaped rod.

The biasing members may comprise springs, and are preferably compression springs. The springs may be of a relatively stiff material, so as to minimise the length of the spring required to achieve a desired biasing force. For example, the springs may be of a nickel-titanium alloy.

The body portions may be of moulded resin, in which case the sleeves may be embedded in the body portions. Conveniently, when the sleeves comprise closed ends, the closed ends are embedded in the resin of the body portions, whilst the open ends are accessible from the exterior of the body portions. By virtue of the closed ends of the sleeves, resin cannot leak into the inside of the sleeves during the moulding process.

The medial part of the lingual bow may carry a lingual body for engagement with the anterior teeth. Preferably, the lingual body is of moulded resin.

The appliance may further comprise a labial bow for engagement with one or more labial surfaces of the anterior teeth. Preferably, the labial bow is biased in a posterior direction. In this way, the labial bow can apply forces to labial surfaces of the anterior teeth, for example to retract protruding teeth or to rotate misaligned teeth. The labial bow works in combination with the lingual bow so that forces can be applied the anterior teeth from both the labial and the lingual sides, which significantly reduces the treatment time necessary to achieve alignment of the teeth.

In one embodiment, the labial bow comprises a pair of side members that are supported by the support structure, and a pair of further biasing members, such as springs, for biasing the side members in the posterior direction.

Conveniently, the further biasing members may be carried on the side members. A posterior end of each side member may comprise a retaining formation, such as a hook or a loop, to retain the biasing members.

Each side member may comprise a spacer disposed between the further biasing member and the posterior end of the side member. This arrangement helps to reduce the risk of the biasing member becoming detached from the posterior end of the side member. When the biasing member is a spring, the spacer helps to guard against unwinding of the spring. The spacer may be a polymeric sleeve, such as a nylon sleeve.

The side members may be arranged to carry a medial part of the labial bow therebetween. For example, the side members may be constructed of metal wire. The medial part of the labial bow may comprise a polymeric moulding and a reinforcing member that extends through the polymeric moulding. The reinforcing member may comprise one or a plurality of fibres, and in one example comprises a cord in which the fibres are twisted together. The fibres may be glass fibres. In one example, the medial part of the labial bow is a composite component having a moulded resin body reinforced by a glass fibre cord. The side members may include connecting formations to which the medial part of the labial bow can be attached. The connecting formations may, for example, comprise hooks, loops, buttons or other formations. Preferably, the connecting formations are configured to allow releasable attachment of the medial part of the labial bow.

Preferably, the medial part of the labial bow is substantially transparent, to reduce visibility of the appliance in use.

In a second arrangement that may be used in conjunction with the invention, an appliance is provided for the orthodontic treatment of one or more anterior teeth in the jaw of a patient, comprising a support structure including a pair of laterally opposed body portions, each body portion being provided with an anchoring device for anchoring the respective body portion to one or more posterior teeth, and a labial bow assembly supported by the support structure and comprising a medial part and a pair of distal parts for connecting the medial part to the support structure. The distal parts of the labial bow assembly comprise elastic members for biasing the medial part in a posterior direction.

In this second arrangement that may be used in conjunction with the invention, the elastic members that form part of the labial bow assembly provide a simple and compact arrangement for urging the medial part of the labial bow assembly against the labial surfaces of the anterior teeth. In this way, the appliance can apply a force to retract or otherwise align the anterior teeth without the need to provide springs or other bulky biasing devices on the facial side of the appliance, which are at risk of clogging and can cause irritation or discomfort. In these ways, the appliance of the second arrangement that may be used in conjunction with the invention provides improved reliability, hygiene and patient comfort.

Preferably, the elastic members are polymeric. For example, the elastic members may comprise orthodontic elastic chain. As is known in the art, orthodontic elastic chain is made from a polymeric material moulded to form a plurality of linked loops to form a flattened, elastically extensible band. Orthodontic elastic chain is readily available in a range of sizes and stiffnesses, so that an appropriate chain can be selected during manufacture of the appliance to achieve the desired biasing force. In this way, fewer custom-made components are required.

In one embodiment, the medial part of the labial bow assembly comprises a polymeric moulding and a reinforcing member that extends through the polymeric moulding. The reinforcing member may comprise a fibre or a plurality of fibres. For example, the reinforcing member may comprise a cord in which the fibres are twisted together. Preferably, the fibres comprise glass fibres. The polymeric moulding may comprise a resin, such as an acrylic resin.

The lingual bow assembly may comprise a pair of links to connect the medial part to the elastic members. When the medial part of the labial bow assembly includes a reinforcing member, each link may comprise a first connecting formations, such as a first loop, to which the reinforcing member of the medial part is attached, and a second connecting formation, such as a second loop, to which the respective elastic member is attached. When present, the reinforcing member may be tied to the first loop. When the medial part of the labial bow assembly includes a polymeric moulding, the first loop of each link may be at least partially embedded in the polymer moulding, so as to reinforce the attachment between the medial part and the link. Instead of loops, the first and/or second connecting formations may comprise hooks, buttons or other suitable formations.

Conveniently, the elastic members may be connected to the anchoring devices of the support structure. To this end, the anchoring devices may comprise attachment formations for attachment of the elastic members. The attachment formations may, for example, be loop formed on wires that are affixed to the anchoring devices. Preferably, the attachment loops may not be fully closed, so as to allow easy changeover of the elastic members. In other embodiments, the attachment formations may comprise buttons, hooks, or other formations for releasable attachment of the elastic members.

Preferably, the elastic members and/or the medial part of the labial bow assembly are substantially transparent. In this way, the visibility of the appliance of the second arrangement that may be used in conjunction with the invention is substantially reduced compared to known appliances in which a metal rod or other opaque lingual bow component is used.

The appliance may further comprise a lingual bow supported by the support structure and biased in an anterior direction for engagement with one or more lingual surfaces of the anterior teeth. In particular, the appliance of the second arrangement that may be used in conjunction with the invention may include the lingual bow arrangement that forms part of the appliance of the invention.

According to a third arrangement that may be used in conjunction with the invention, there is provided an appliance for the orthodontic treatment of one or more anterior teeth in the jaw of a patient, comprising a support structure including a pair of laterally opposed body portions, each body portion being provided with an anchoring device for anchoring the respective body portion to one or more posterior teeth, and a labial bow assembly comprising a medial part for engagement with the anterior teeth and a pair of side members supported by the support structure and arranged to carry the medial part therebetween. The side members are biased in a posterior direction to urge the medial part into engagement with the anterior teeth.

In such an appliance, the medial part can be of a different material and/or construction to the side members, allowing the design of each component to be optimised. Furthermore, because the medial part is carried by the side members, the medial part can be removed and replaced during treatment without the need to replace the side members also.

Preferably, the medial part of the labial bow assembly is substantially transparent, to further reduce the visibility of the appliance. The side members may comprise metal wires.

In one embodiment, the medial part of the labial bow assembly is elastically extensible. For example, the medial part of the labial bow assembly may comprise an orthodontic elastic chain, so as to minimise the visual impact and optimise the comfort of the appliance, and to simplify manufacture of the appliance.

In another embodiment, the medial part of the labial bow assembly comprises a polymeric moulding and a reinforcing member that extends through the polymeric moulding. The reinforcing member may comprise one or a plurality of fibres. For example, the reinforcing member may comprise a cord in which the fibres are twisted together. The fibres may be glass fibres. The polymeric moulding may be a moulded resin, such as acrylic resin.

The side members may comprise connecting formations at their anterior ends, and the medial part may be attachable to the connecting formations. For example, the connecting formations may be loops, hooks, buttons or other suitable formations. When the medial part comprises an orthodontic chain, the connecting formations may pass through or otherwise engage with end loops of the chain. For example, a connecting formation in the form of a hook or loop may pass through an end loop of the chain. Alternatively, when the medial part comprises a reinforcing member, the reinforcing member may be attached to the connecting formations. In one example, when the reinforcing member is in the form of a glass fibre cord or other fibrous structure and the connecting formations comprise loops, the reinforcing member may be tied to the loops of the connecting formations. When the medial part includes a polymeric moulding, each connecting formation may be at least partially embedded in the polymeric moulding.

The side members may be slidably attached to the support structure. For example, the appliance may comprise a pair of sleeves for slidably receiving respective parts of the side members. Conveniently, the sleeves are mounted to the anchoring devices of the support structure.

A pair of biasing members may be provided for biasing the side members in the posterior direction. The biasing members may be mounted on the side members. In one embodiment, each side member comprises a spacer disposed between the biasing member and a posterior end of the side member, so as to reduce the risk of the biasing member slipping out of place.

The appliance may further comprise a lingual bow supported by the support structure and biased in an anterior direction. For example, the appliance may include the lingual bow arrangement that forms part of an aspect of the present invention.

A fourth arrangement that may be used in conjunction with the present invention provides an appliance for the orthodontic treatment of one or more teeth in the jaw of a patient, comprising a support structure including a pair of laterally opposed body portions, each body portion being provided with an anchoring device for anchoring the respective body portion to one or more posterior teeth, and an adjustable connector disposed between the body portions for adjusting the lateral distance therebetween. The adjustable connector is arranged to apply an adjustable retraction force to the body portions to draw the body portions together. Accordingly, the adjustable connector can be set so that the body portions urge the posterior sets of teeth towards one another across the jaw during treatment, thereby to close gaps between the teeth.

The appliance preferably includes a lingual bow supported by the support structure and biased in an anterior direction, and/or a labial bow supported by the support structure and biased in a posterior direction.

By providing an adjustable connector, the relative lateral position of the body portions can be set to alter the spacing of the teeth whilst the anterior teeth are aligned by the lingual and labial bows. As treatment proceeds, the adjustable connector can be periodically adjusted to maintain, increase or decrease the force applied to the posterior sets of teeth by the body portions.

The connector may comprise a pair of connector pieces and a screw element for adjusting the spacing between the connector pieces, and each body portion may be affixed to a respective one of the connector pieces. The connector pieces may, for example, be embedded in the respective body portions. Conveniently, the connector may be a pre-fabricated orthodontic expander device.

In another example, there is provided an appliance for the orthodontic treatment of one or more teeth in the jaw of a patient, comprising a support structure including a pair of laterally opposed body portions, each body portion being provided with an anchoring device for anchoring the respective body portion to one or more posterior teeth, and an adjustable connector disposed between the body portions for adjusting the lateral distance therebetween.

In one example, the adjustable connector is arranged to apply an adjustable retraction force to the body portions to draw the body portions together. Accordingly, the adjustable connector can be set so that the body portions urge the posterior sets of teeth towards one another across the jaw during treatment, thereby to close gaps between the teeth.

In another example, the adjustable connector is arranged to apply an adjustable expansion force to the body portions to splay the body portions apart. In this case, the body portions act against the posterior teeth to force them apart during treatment. This can be useful in the treatment of overcrowded teeth.

Appliances of an aspect of the invention may comprise at least one support member for bracing a respective tooth against movement during treatment. The support member therefore ensures that only the misaligned teeth are moved by the action of the appliance. For example, a pair of support members may be provided for bracing the canine teeth against movement during treatment. This is useful in cases where, for example, the dental arches are relatively narrow.

The support member may comprise a wire, and the posterior end of the wire may be embedded in the support structure. Preferably, an anterior end of the wire terminates at a loop for engagement with the tooth.

In a further example, the arrangement extends to a labial bow component for an orthodontic appliance, comprising a polymeric moulding, and a reinforcing member extending through the polymeric moulding. The polymeric moulding and the reinforcing member are substantially transparent.

In this way, a substantially clear composite labial bow component is provided. The visibility of the labial bow component is substantially reduced compared to prior art components in which a metal wire is used, but the strength of the labial bow component is not compromised. Furthermore, by virtue of the reinforcing member, the thickness of the polymeric moulding can be smaller than if no reinforcing member were present, increasing patient comfort and further reducing the visual impact of the device.

The reinforcing member may comprise at least one fibre. Preferably, the reinforcing member comprises a plurality of fibres. In one example, the reinforcing member comprises a fibrous cord. Preferably, the fibres are glass fibres.

The polymeric moulding may comprise a resin, for example an acrylic resin. The polymeric moulding may be moulded to apply suitable forces to labial surfaces of the anterior teeth in use to urge the teeth into alignment.

In a variant, there is provided a labial bow component for an orthodontic appliance, comprising a polymeric moulding and a reinforcing cord extending through the polymeric moulding. Preferably, the moulding and the cord are substantially transparent.

In another example, the arrangement extends to a labial bow assembly comprising a labial bow component comprising a polymeric moulding and a reinforcing member extending through the polymeric moulding as described above, and a pair of side members for connecting the labial bow component to the support structure of an orthodontic appliance.

In one example, the side members comprise wire rods. In another example, the side members are elastically extensible, and may be substantially transparent. For instance, the side members may comprise orthodontic elastic chain. In this case, the superior control and aesthetics of a composite labial bow are combined with the comfort of orthodontic elastic chain.

The labial bow assembly may further comprise a pair of wire links to attach the labial bow component to the side members. Each wire link may comprise a connecting formation, for example a loop, hook, button or other suitable formation. For example, when the connecting formations are loops, the reinforcing member of the labial bow component can be tied to the loops to attach the labial bow component to the side members.

In another arrangement, the anterior end of each side member comprises a connecting formation, such as a loop, and the reinforcing member of the labial bow component is tied or otherwise attached to the connecting formation to attach the labial bow component to the side members.

In some examples, because the reinforcing member can be tied to the wire loops of the side members or, when links with wire loops are provided, to the wire loops of the links, the arrangement allows the lingual bow assembly to be easily constructed and connected during the manufacturing of an orthodontic appliance.

Preferably, the connecting formations are embedded in the polymeric moulding of the labial bow component. In this way, the knots or other connections between the reinforcing member and the connecting formations are protected and reinforced by the polymeric moulding.

A further arrangement that may be used with the invention extends to an appliance for the orthodontic treatment of one or more anterior teeth in the jaw of a patient, comprising a support structure including a pair of laterally opposed body portions, each body portion being provided with an anchoring device for anchoring the respective body portion to one or more posterior teeth, and a labial bow assembly including a labial bow component comprising a polymeric moulding and a reinforcing member extending through the polymeric moulding, and a pair of side members for connecting the labial bow component to the support structure, as described above. The labial bow assembly is supported by the support structure and biased in a posterior direction.

Preferably, each side member of the lingual bow assembly is connected to a respective one of the anchoring devices of the appliance. Biasing members that act on the side members may be provided to bias the labial bow assembly in the posterior direction.

The appliance may further comprise a lingual bow supported by the support structure and biased in an anterior direction. In particular, the appliance may include the lingual bow arrangement that forms part of an aspect of the invention.

The appliances of an aspect of the invention are particularly useful when embodied as removable appliances, which are designed to be removed and reinserted by the patient.

Embodiments of the present invention will now be described, by way of example only, with reference to the accompanying drawings, in which like reference numerals are used for like features, and in which:
Figure 1, which has already been referred to above, shows a known removable orthodontic appliance fitted to the upper jaw of a patient;
Figure 2 shows a removable orthodontic appliance according to an embodiment of the present invention, fitted to the upper jaw of a patient;
Figure 3 shows a removable orthodontic appliance according to another embodiment of the present invention, fitted to the upper jaw of a patient;
Figure 4 shows a removable orthodontic appliance according to a further embodiment of the present invention, fitted to the upper jaw of a patient; and
Figure 5 shows a removable orthodontic appliance according to a still further embodiment of the present invention, fitted to the upper jaw of a patient.

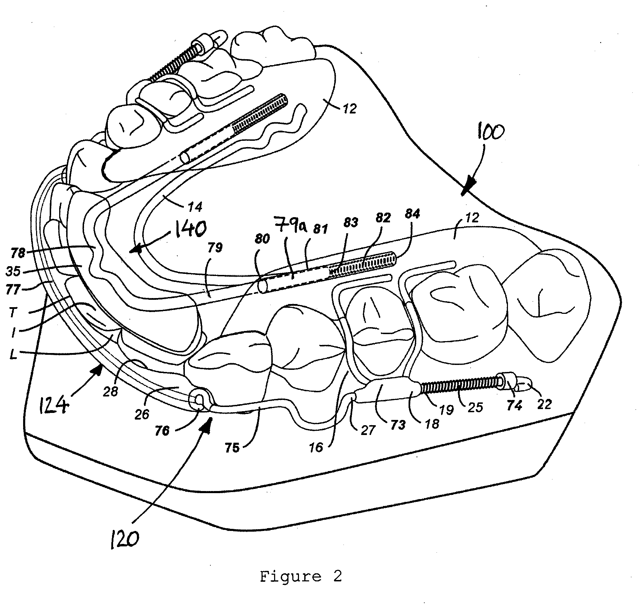

A removable orthodontic appliance 100 according to one embodiment of the present invention is shown in Figure 2.

The appliance 100 of the invention includes a support structure having a pair of laterally opposed body portions 12 moulded from hardened acrylic. The body portions 12 are connected to one another across the jaw by an arch wire 14. Each end of the arch wire 14 is embedded in a respective one of the body portions 12.

Each body portion 12 is provided with an anchoring device, in the form of an Adams clasp 16, for engagement with one of the posterior teeth. An inner (lingual) part of each clasp 16 is embedded in the acrylic of the respective body portion 12, so that the body portions are securely affixed to the clasps 16 and are held in place against the posterior teeth when the clasps 16 are engaged with the teeth. In the illustrated example, the clasps 16 are engaged with the second bicuspids, although it will be appreciated that the clasps 16 may engage with a different posterior tooth or with two or more posterior teeth.

As will now be described, the appliance 100 of Figure 2 includes improved arrangements for applying forces to the lingual and labial sides of the targeted anterior teeth T.

A lingual (palatial) bow assembly 140 is provided to apply forces to the lingual side I of the targeted anterior teeth T. The lingual bow assembly 140 includes an arch-shaped lingual rod 79, with a midsection 78 that carries a hard moulded acrylic lingual body 35. Two generally parallel portions 79a of the lingual rod 79 extend distally from the midsection 78.

A tubular sleeve 81, referred to hereafter as a lingual sleeve, is also partly embedded in each body portion 12. Each lingual sleeve 81 has an open end 80 and a closed end 84, so that each sleeve 81 forms an elongate cup shape. The closed end 84 of each sleeve is embedded within the body portion 12, whilst the open end 80 is accessible from outside the body portion 12.

The distally-extending portions 79a of the lingual rod 79 extend through the open ends 80 of the lingual sleeves 81, so that the distally-extending portions 79a are slidably received in the lingual sleeves 81.

Each lingual sleeve 81 houses a coil spring 82. One end of each spring 82 bears against the closed end 84 of its respective sleeve 81, and the other end of each spring 82 bears against the end 83 of the respective distally-extending portion 79a of the lingual rod 79. In this way, the springs 82 bias the lingual bow assembly 140 in an anterior direction.

The lingual rod 79 is formed from a wire with an outside diameter that is close to the inside diameter of the sleeves 81. In this way, the distally-extending portions 79a of the lingual rod 79 are a close sliding fit in the sleeves 81. The coil springs 82 cannot slip between the sleeves 81 and the distally-extending portions 79a, so that the springs 82 are retained in the sleeves 81 by the lingual rod 79 when the lingual body 35 bears against the anterior teeth T in use.

As is generally known in the art, the lingual body 35 is shaped to engage with parts of the lingual surfaces I of the targeted anterior teeth T. By the action of the springs 82, the lingual body 35 is urged against the lingual surfaces I, to procline and/or rotate the targeted teeth T as required.

For example, the lingual body 35 may be moulded against a model of the patient's mouth, in which the teeth have been set into their desired positions. When the appliance 100 is then used in the patient's mouth, the lingual body 35 contacts the lingual surfaces I of the teeth T at the appropriate places to urge the teeth into the desired alignment.

Because the springs 82 are housed within the lingual sleeves 81, the springs 82 are protected from damage, and are less prone to clog with calculus (tartar) or food debris compared to prior art arrangements in which the springs are exposed. Furthermore, the sleeves 81 shield the springs 82 from contact with the tongue or other parts of the mouth, reducing the risk of irritation or discomfort.

Furthermore, by housing the springs 82 in the lingual sleeves 81, there is more design freedom in the shape of the lingual rod 79 compared to appliances in which the springs are carried on the lingual rod itself. In particular, in the known appliance of Figure 1, it is undesirable to include sharp bends in portion of the lingual rod that carries the springs, since doing so reduces the mechanical efficiency of the springs, increases the risk of clogging of the springs, and increases the risk that the exposed springs could dig into or otherwise irritate the lingual soft tissues.

In contrast, in the appliance of Figure 2, the lingual rod 79 can include relatively sharp offset bends (not shown) to raise the midsection 78 of the lingual rod 79, and hence the lingual body 35, towards the incisal edge of the teeth. In this way, the lingual rod assembly 140 can apply more leverage to the anterior teeth T than would otherwise be possible, resulting in rapid tipping of the anterior teeth T. The springs 82 are straight and free from bends, to optimise their mechanical efficiency.

Similarly, in cases where the incisor teeth occupy a relatively narrow space, for example when the dental arches are particularly narrow or triangular in shape, the midsection 78 of the lingual rod 79 may need to be considerably narrower than the space between the lingual sleeves 81. Because the springs 82 are housed in the lingual sleeves 81 and not on the lingual rod 79 itself, the lingual rod 79 can be shaped with tighter curves to create a narrow midsection 78 without interfering with the operation of the springs 82 or increasing the risk of patient discomfort.

The length of the springs 82 is dictated by the distance between the closed ends 84 of the lingual sleeves 81 and the ends 83 of the lingual rod 79. This means that, advantageously, the length of the springs 82 is independent of the shape and size of the lingual rod 79 and the lingual body 35, so that the length of the springs 82 can be selected to provide the desired force.

In comparison, in prior art arrangements such as that shown in Figure 1, the springs used to bias the lingual rod are carried on the lingual rod itself. The length of each spring is therefore determined by the distance from the end of the respective lingual sleeve to the lingual body, which in turn is dictated by the patient's physiology and orthodontic requirements.

In the appliance of Figure 2, the length of the springs 82 can be selected during manufacture of the device by manufacturing the distally-extending portions 79a of the lingual rod 79 with an appropriate length. Relatively short springs are generally preferred, to minimise the length of the lingual sleeves 81 and therefore the size of the body portions 12 of the support structure. To this end, the springs 82 may be formed from a relatively stiff material, such as a nickel-titanium alloy, so as to provide a relatively high spring force in a short length. In other cases, the springs 81 may be made from a conventional stainless steel or other biocompatible alloy.

Because the springs 82 are retained in the lingual sleeves 81 by the distally-extending portions 79a of the lingual rod 79, and the open ends 80 of the sleeves have a diameter at least as large as the outer diameter of the springs 82, the springs 82 can easily be removed and replaced without altering the geometry of any of the other components of the appliance. To remove the springs, the lingual rod 79 is removed from the appliance, and the springs 82 then can be removed through the open ends 80 of the sleeves 81. Replacement springs 82 can be pushed into the sleeves 81 through the open ends 80, and the lingual rod 79 can then be re-installed. In use, the lingual rod 79 is retained in the appliance by the anterior teeth T, so that no additional retaining device is required.

In this way, the lingual rod arrangement of the present invention can be easily disassembled and reassembled to allow replacement of the springs 82. For example, during a course of treatment, the springs 82 may be replaced with stronger or weaker versions when required, so as to increase or decrease the force applied to the targeted teeth T by the lingual body 35.

When the appliance is removed from the mouth, the patient can hold the lingual rod 79 in place so that it remains engaged with the sleeves 81 and, in the event that the lingual rod 79 does unintentionally become detached from the appliance, it can be easily refitted by the patient.

So that the distally-extending portions 79a of the lingual rod 79 are able to slide easily in the lingual sleeves 81, care is taken during manufacture of the device to ensure that the lingual sleeves 81 are generally parallel. To assist in retention of the lingual rod 79 when the appliance is removed from the mouth, the sleeves 81 and/or the distally-extending portions 79a of the lingual rod 79 may converge slightly in the anterior direction.

The internal surfaces of the sleeves 81 are smooth to minimise friction between the distally-extending portions 79a and the sleeves 81. For example, the internal surfaces of the sleeves 81 may be polished and/or coated with a low-friction material. For instance, tubing that is used for medical needle manufacture, which has a smoother internal surface than conventional orthodontic tubing, may suitably be used for the sleeves 81.

In the illustrated embodiment, the lingual sleeves 81 are positioned such that the open end 80 of each sleeve 81 is recessed in the respective body portion 12. However, in other arrangements, the sleeves 81 may be positioned so that their open ends 80 are spaced from the body portions 12.

A three-part labial bow assembly 120 is mounted to the appliance 100 by way of a pair of tubular labial sleeves 18. The labial bow assembly 120 comprises two side members 75 that cooperate with the labial sleeves 18, and a medial bow or medial part 124 that is carried by and extends between the side members 75 along the labial side I of the anterior teeth T.

Each labial sleeve 18 is attached to the facial (outer) side of a respective one of the clasps 16 at a laser weld 73. By laser welding the labial sleeve 18 to the clasp 16, a higher-strength joint with smoother surfaces is obtained, compared to a soldered joint, for example. The labial sleeves 18 are preferably of stainless steel, and may be formed for example from 1 mm (0.40 inch) stainless steel tubing.

Each side member 75 of the labial bow assembly 120 is made from metal wire. For example, 0.75 mm (0.030 inch) stainless steel wire may be used. A distally-extending end portion 27 of each side member 75 is slidably received in the respective labial sleeve 18, and the distally-extending portion 27 of each side member 75 terminates at a retaining formation, which in this example takes the form of a hooked end 22 of the wire.

A tubular spacer or sleeve 74 and a coil spring 25 are journaled around the distally-extending portion 27 of each side member 75. The anterior (frontmost) end of the spring 25 acts on the distal (rearmost) end 19 of the labial sleeve 18. The spacer 74 is positioned between the distal (rearmost) end of the spring 25 and the hooked end 22. In this way, the distal end of the spring 25 acts on the spacer 74, so that the spacer 74 reduces the likelihood of the spring 25 unwinding or otherwise becoming displaced from its intended position, as can occur in prior art devices which lack a spacer. This reduces the risk of injury and irritation, and also improves the mechanical reliability of the appliance. The spacer 74 can also cover sharp edges as may be found at the end of the spring 25 or on the hooked end 22 of the side member 75 of the labial rod 120, thereby further reducing the risk of injury or irritation to the mouth. In this example, the spacer 74 is of a nylon material, but any suitable material could be used.

Each side member 75 curves forwards from the distal end portion 27, generally following the line of the bicuspids, and terminates at a medial end comprising a connecting formation in the form of a loop 76. In use, the loops 76 are disposed generally adjacent to the incisor teeth.

The medial part 124 of the labial bow assembly 120 comprises a core member in the form of a fibrous rope or cord 77 of glass fibre filaments. A plurality of filaments are twisted together to form the cord 77. At each end of the cord 77, the twisted filaments are looped through the loops 76 at the medial ends of the respective side member 75 and tied to the loops 76.

A labial body 26 of hardened clear acrylic resin is carried by the cord 77. An inner surface 28 of the labial body 26 is shaped to press against the lingual surfaces L of the targeted anterior teeth T.

The medial part 124 of the labial bow assembly 120 is therefore a composite component in which the fibrous cord 77 serves as a reinforcing member for the labial body 26. Because the glass fibres of the cord 77 are substantially transparent and the acrylic resin of the labial body 26 is clear, the visibility of the medial part 124 of the labial bow assembly 120 is considerably reduced compared to prior art appliances in which a metal wire extends across the labial side of the anterior teeth to form a labial bow. This improves the patient experience and encourages compliance.

Also, the provision of a reinforcing cord 77 means that the acrylic labial body 26 can be substantially thinner than would be necessary if no reinforcement were provided, since the presence of the cord 77 significantly increases the tensile strength of the composite medial part 124.

To manufacture the medial part 124 of the labial bow assembly 120, glass fibre filaments are twisted together by hand to form the cord 77, which is then tied at each end to the loops 76 of the side members 75. During manufacture of the appliance, the components of the labial bow assembly 120 are assembled onto a model of the patient's jaw with the targeted teeth set into their desired positions, with the components being temporarily waxed into place as required as the acrylic parts are moulded. Once in place on the model, acrylic resin is cast over the cord 77 to form the labial body 26.

A gap between the cord 77 and the labial surfaces of the anterior teeth of the model ensures that the resin can flow into the gap to mould the inner surface 28 of the labial body 26 with the desired shape. The resin is overmoulded onto the cord 77, so as to encapsulate the filaments of the cord 77. The labial body 26 also extends at each end to encapsulate the loops 76, so that the cord 77 cannot easily become untied from the loops 76 once the resin has hardened. Once the resin has cured, it is trimmed and polished to form the final shape of the labial body 26.

In use, the springs 25 act to urge the side members 75 of the labial rod assembly 120 in a posterior direction. The side members 75, in turn, pull the medial part 124 of the labial bow assembly 120 towards the anterior teeth T. In this way, the inner surface 28 of the labial body 26 is urged against the labial surfaces L of the targeted anterior teeth T, so as to retract and/or rotate the targeted teeth T as required.

Whilst glass fibre filaments are preferred for use as the cord 77, it is conceivable that other fibrous materials, such as nylon or aramid polymer fibres, could be used with similar results. A non-fibrous reinforcing member could also be used.

The labial bow assembly 120 and the lingual bow assembly 140 of the appliance 100 act together on the targeted anterior teeth T so that forces can be applied to each tooth from both sides. Because each bow assembly 120, 140 is spring-biased, the forces applied remain relatively constant with time. As is known in the art, this arrangement can result in substantially reduced treatment times when compared with fixed braces or rigid removable aligner appliances.

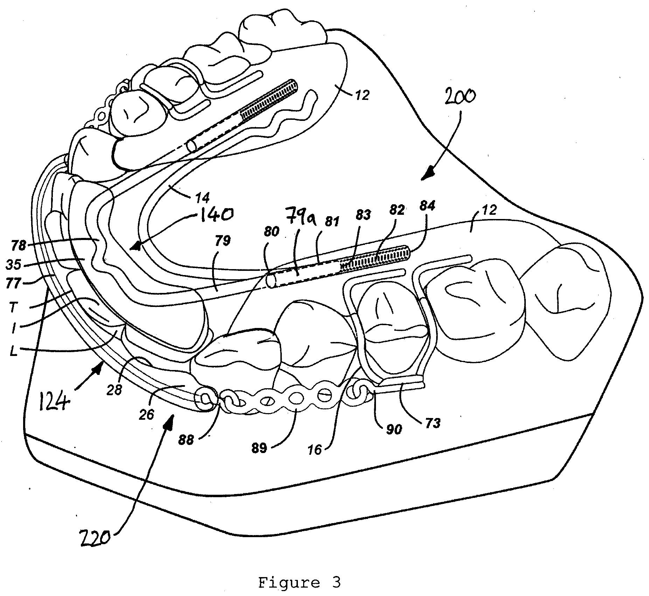

Figure 3 shows an appliance 200 according to another embodiment of the invention. The appliance 200 of Figure 3 is similar in many respects to the appliance 100 of Figure 2. For example, the appliance 200 of Figure 3 has the same support structure 12, 14, lingual bow assembly 140 and enclosed-spring biasing arrangement 81, 82 as the appliance 100 of Figure 2. Accordingly, like reference numerals are used to denote like features, and reference should be made to the corresponding description above for a detailed explanation of those features.

The appliance 200 of Figure 3 has a labial bow assembly 220 that comprises a labial bow component or medial part 124 having an acrylic labial body 26 supported by a glass fibre reinforcing cord 77, as described above with reference to the appliance 100 of Figure 2.

However, unlike the appliance 100 of Figure 2, the appliance 200 of Figure 3 does not use springs to provide a biasing force to urge the labial body 26 against the anterior teeth T.

Instead, the labial bow assembly 220 of the appliance 200 of Figure 3 includes a pair of elastic side members 89 that, in the illustrated example, are formed from orthodontic elastic chain.

As is known in the art, orthodontic elastic chain is made from an elastically extensible polymeric material, and is moulded to form a chain-like structure having a plurality of linked loops. The orthodontic chain can therefore be stretched between two points to apply a retracting force therebetween.

Each orthodontic chain section 89 is connected to the medial part 124 of the labial bow assembly 220 by way of a link 88. Each link 88 comprises a length of metal wire, bent to form first and second connecting formations, in the form of loops or hooks, at both ends. The respective end of the fibrous cord 77 of the medial part 124 is tied to a first loop at the mesial (innermost) end of the link 88, and the second loop, at the other end of the link 88, passes through the anterior (frontmost) end loop of the orthodontic chain section 89. The moulded acrylic labial body 26 extends over the mesial end of the link 88, to cover and secure the knot between the cord 77 and the link 88.

The distal ends of the orthodontic chain sections 89 are attached to respective wire rods 90, which in turn are secured to the facial (outer) side of the respective Adams clasp 16 by way of a laser weld 73 or other suitable attachment means. The anterior (frontmost) end of each rod 90 is formed into a loop or hook formation, which passes through the distal end loop of the orthodontic chain section 89.

In this way, the appliance 200 of Figure 3 has a simpler and more compact labial bow arrangement, in which the labial body 26 is urged against the labial side L of the targeted anterior teeth T using the elasticity of the orthodontic chain sections 89. As a result, it is not necessary to provide a slidable mounting to connect the labial bow assembly 220 to the body portions 12, nor to mount springs behind the Adams clasps 16. The result is a more compact, less complex arrangement at the posterior end of the appliance 200 which further improves the comfort and ease of cleaning of the appliance 200. The absence of springs on the facial side of the teeth also helps to reduce the visibility of the appliance when worn.

Furthermore, since the biasing springs 82 for the lingual bow assembly 140 are enclosed in the lingual sleeves 81, the appliance 200 of Figure 3 advantageously has no exposed springs, significantly reducing the risk of clogging and improving comfort for the patient.

The orthodontic chain sections 89 are preferably substantially transparent, along with the medial part 124. In this way, the visual impact of the labial bow assembly 220 is further reduced.

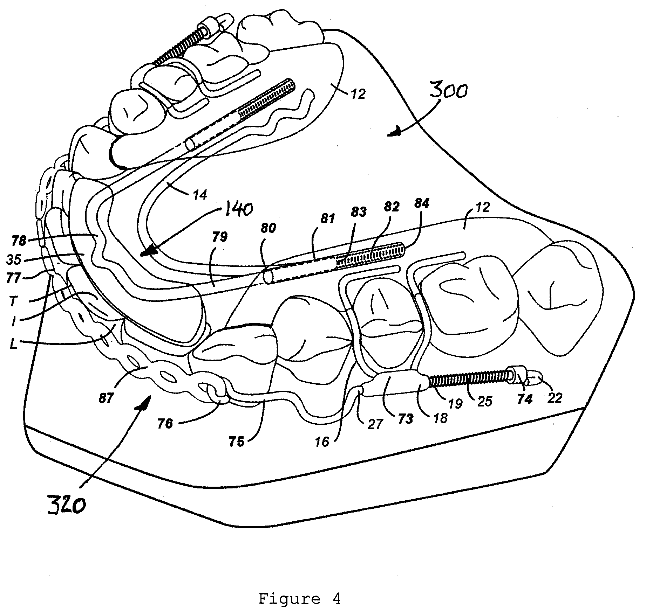

An appliance 300 according to a further embodiment of the invention is illustrated in Figure 4. The appliance 300 of Figure 4 is similar in many respects to the appliance 100 of Figure 2. For example, the appliance 300 of Figure 4 has the same support structure 12, 14, lingual bow assembly 140 and enclosed-spring biasing arrangement 81, 82 as the appliance 100 of Figure 2. Accordingly, like reference numerals are used to denote like features, and reference should be made to the corresponding description above for a detailed explanation of those features.

The appliance 300 of Figure 4 includes a three-part labial bow assembly 320 that is similar to the labial bow assembly 120 of the appliance 100 of Figure 2. However, in the appliance 300 of Figure 4, the medial part of the labial bow assembly 320 comprises a length of orthodontic elastic chain 87, in place of the composite labial bow of the Figure 2 embodiment.

As in the appliance 100 of Figure 2, in the Figure 4 appliance 300 the labial bow assembly 320 is mounted to the appliance 300 by way of a pair of tubular labial sleeves 18 that are attached to the facial (outer) sides of the respective clasps 16 at a laser weld 73. Wire side members 75 of the labial bow assembly 320 include distally-extending end portions 27 that are slidably received in the respective labial sleeves 18, and the distally-extending portion 27 of each side member 75 terminates at a hooked end 22. The labial bow assembly 320 is biased in a posterior direction by springs 25 that are carried on the distally-extending portions 27 of the side members 75. One end of each spring 25 acts on the distal end 19 of the labial sleeve 18. The other end of each spring 25 acts on a respective spacer 74 positioned between the spring 25 and the hooked end 22.

Each side member 75 curves forwards from the distal end portion 27, generally following the line of the bicuspids, and terminates at a medial end comprising a connecting formation in the form of a loop 76. In use, the loops 76 are disposed generally adjacent to the incisor teeth.

The terminal loops 76 of the side members 75 are hooked around a respective end loop of the orthodontic chain 87. In this way, the spring-biased side members 75 serve to pull the orthodontic chain 87 against the labial surfaces L of the targeted anterior teeth T.

When the appliance 300 is fitted to the patient's mouth, the orthodontic chain 87 is stretched over the lingual surfaces L of the anterior teeth T. In this way, the orthodontic chain 87 applies retracting forces to protruding parts of the anterior teeth T, thereby to urge any protruding anterior teeth T into alignment along an arc. In this way, the elastic orthodontic chain 87 can displace the anterior teeth T without the need to provide a specially-moulded acrylic labial body.

The orthodontic chain 87 can be made from a clear polymeric material, which substantially reduces the visual impact of the appliance 300 compared to known appliances in which a wire labial rod is used. The absence of a labial body can also reduce the visibility of the appliance 300.

The orthodontic chain 87 can be readily removed from the appliance 300. For example, the loops 76 are preferably open, so as to form hooks, so that the chain can be unhooked from the loops 76. Alternatively, if the loops 76 are substantially closed during manufacture, the chain could be removed by cutting the material of the chain to release it from the terminal loops 76. Instead of hooks or loops, other suitable connecting formations, such as buttons, could be used.

During treatment, the orthodontic chain 87 could be replaced with a chain of different stiffness to achieve a desired clinical result. Furthermore, because orthodontic elastic chain material tends to stretch permanently over time, the orthodontic chain 87 can be replaced periodically to maintain the desired force.

Similarly, the orthodontic chain 87 of the Figure 4 appliance 300 could be replaced with a fibre-reinforced composite medial part 124, as shown in Figure 2, so as to convert the appliance 300 of Figure 4 into the appliance 100 of Figure 2. Because the side members 75 of the labial bow assemblies are the same in each embodiment, the fibrous cord 77 of the composite medial part 124 can be tied to the terminal loops 76 of the side members 75 as described above with reference to Figure 2.

The ability to interchange the medial parts 87, 124 of the labial bow assemblies 120, 320 of the appliances 100, 300 of Figures 2 and 4 broadens the range of clinical options during treatment. For example, an orthodontic elastic chain 87 as shown in Figure 4 could be used during early stages of treatment to bring the targeted teeth T into approximate alignment. Subsequently, the chain 87 could be replaced with the composite medial part 124 shown in Figure 2 to urge the teeth T into their final positions, using the moulded acrylic labial body 26 of the medial part 124 to achieve fine adjustment of the positions of the teeth T towards the end of treatment.

It is also conceivable that the labial bow assembly 320 of the appliance 300 of Figure 4 could be replaced with a conventional wire-rod labial bow, such as that shown in Figure 1 during treatment. Conveniently, the conventional wire-rod labial bow could be fitted directly to the labial sleeves 18 of the appliance 300.

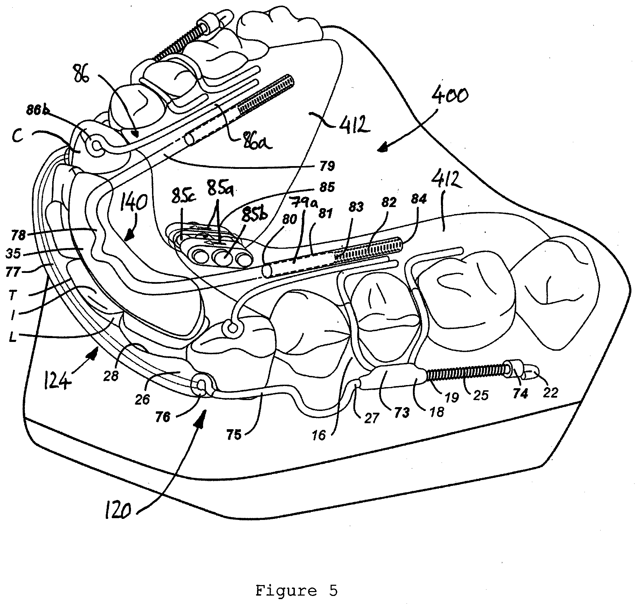

An appliance 400 according to another embodiment of the invention is illustrated in Figure 5. The appliance 400 of Figure 5 is similar in many respects to the appliance 100 of Figure 2. In particular, the appliance 400 of Figure 5 has the same lingual bow assembly 140, lingual bow biasing arrangement 81, 82, labial bow assembly 120 and labial bow biasing arrangement 25, 74 as the appliance 100 of Figure 2. Accordingly, like reference numerals are used to denote like features, and reference should be made to the corresponding description above for a detailed explanation of those features.

In the appliance 400 of Figure 5, the support structure comprises two moulded acrylic body portions 412 that are extended towards one another across the palate. The body portions 412 are connected to an adjustable connector in the form of an orthodontic screw device 85, disposed between the body portions 412. The screw device 85 is operable to adjust the spacing between the body portions 412.

The screw device 85 is suitably of a type generally known in the art for palatial expansion. The screw device comprises a pair of jaws or connector pieces 85a that are displaceable relative to one another by means of a screw spindle 85b. The connector pieces 85a are slidably mounted on two parallel pins 85c that serve to maintain alignment of the connector pieces 85a. The screw spindle 85b is arranged to engage with a suitable tool to allow turning of the screw spindle 85b and hence displacement of the connector pieces 85a. The use of a screw device 85 in this way allows fine control and adjustment of the position of the body portions 412 that could not readily be achieved by the use of springs, bent wires or other biasing means.

Each body portion 412 of the support structure is affixed to a respective connector piece 85a of the screw device 85, conveniently by embedding each connector piece 85a into the material of the respective body portion 412 during moulding of the body portions 412.

The appliance 400 can be used to treat patients with crowded teeth. In such a case, the screw device 85 is fixed to the body portions 412 of the device with the connector pieces 85a closed together. In use, the screw device 85 can be adjusted to gradually urge the body portions 412 of the support structure apart. In this way, the body portions 412 are spread apart against the posterior teeth to expand the palate. This creates space in the jaw to accommodate the anterior teeth T as they become aligned by the action of the labial and lingual bow assemblies 120, 140.

When used in this way, the appliance 400 facilitates treatment in which up to approximately 5 mm of space must be created to accommodate the aligned teeth. Advantageously, the space can be created relatively quickly to rapidly 'unlock' crowded incisor teeth. Furthermore, the space can be created whilst alignment of the targeted teeth T is underway, further reducing treatment time. The appliance 400 of Figure 5 can be used in addition to or instead of more conventional teeth-spacing techniques, such as interproximal reduction in which enamel is removed from the interproximal surfaces of some of the teeth to create space.

A variant of the appliance 400 can be used to treat patients with excessively spaced teeth. In this case, the screw device 85 is fixed to the body portions 412 of the support structure during manufacture with the connector pieces 85a already spaced apart. In use, the screw spindle 85b can be turned to gradually draw the connector pieces 85a together, thereby applying forces to the posterior teeth to draw the opposing dental arches together. In this way, gaps between the teeth (particularly the anterior teeth) can be closed whilst alignment of the teeth is underway.

In this variant, the appliance 400 may include additional retentive features (not shown), such as additional Adam's clasps, ball clasps or other clasps, to ensure that the two body portions 412 remain securely anchored to the posterior teeth as the opposing dental arches are drawn together.

The appliance 400 is also provided with a pair of canine support wires 86. A distal part 86a of each canine support wire 86 is embedded in a respective one of the body portions 412 of the support structure. The distal parts 86a of the canine support wires are arranged generally parallel to the lingual sleeves 81.

Each canine support wire 86 extends forward from the respective body portion 412 of the support structure and curves outwards to terminate at a loop 86b. The loops 86b bear against the lingual faces of the respective canine teeth C. In this way, the canine support wires 86 serve to support the canine teeth C to prevent undesired movement of the canine teeth C during treatment.

It will be appreciated that the features described above with reference to Figures 2 to 5 could be used individually or in combinations not explicitly illustrated. For example, the canine support wires and/or the screw device 85 of the appliance 400 of Figure 5 could be used in the appliances 100, 200, 300 of Figures 2 to 4. Likewise, the labial bow assemblies 120, 220, 320 and their associated biasing arrangements shown in Figures 2 to 5 are interchangeable between the embodiments of the invention.

It is conceivable that the labial bow assemblies 120, 220, 320 and the associated biasing arrangements of the above-described embodiments of the invention could be used in combination with a conventional lingual bow arrangement, such as that illustrated in Figure 1. Similarly, the lingual bow arrangement 140 of the above-described embodiments could be used with a conventional labial bow, such as that shown in Figure 1.

The anchoring devices that anchor the body portions 12 to the posterior teeth can be of any suitable type. For example, instead of Adams clasps, a different wire clasp or crib device could be provided. It is also conceivable that parts of the body portions could extend over one or more of the posterior teeth to anchor the appliance to the jaw.

The appliances shown Figures 2 to 5 are illustrated in use in the upper jaw of a patient, but it will be appreciated that the appliances could also be made for use in the lower jaw with the same functionality.

The body portions may be separate mouldings, joined by an arch wire, a spring, an adjustable connector, or other joining arrangements. It is also conceivable that the body portions may be joined only by the labial and/or lingual bow arrangements.

In other arrangements, the body portions may be joined by a further moulding part, which may be integrally formed with the body portions. For example, when the appliances of Figures 2 to 4 are designed for use in the upper jaw, the body portions 12 of the support structure may be joined by a palate portion, so that the arch wire 14 is not required. The palate portion may be of hard acrylic, and may be integrally formed with the body portions 12.

In some of the above-described embodiments, orthodontic elastic chain is used as a readily-available and convenient elastic material that is flexible to lie against the surfaces of the teeth and has low visibility whilst being capable of applying sufficient forces where required to align the teeth. It is conceivable, however, that the orthodontic elastic chain in the illustrated embodiments could be replaced with an alternative elastic material, such as elastic bands.

As will be appreciated by a person skilled in the art, further modifications and variations not explicitly described above are also possible without departing from the scope of the invention as defined in the appended claims.

## Claims

1. An appliance (100) for the orthodontic treatment of one or more anterior teeth in the jaw of a patient, comprising:
a removable lingual bow (140) having a medial part (78) for engagement with a lingual side of the anterior teeth (I), and a pair of distal parts (79a) extending in a posterior direction from the medial part (78);
a support structure (12, 14) including a pair of laterally opposed body portions (12), each body portion (12) being provided with an anchoring device (16) for anchoring the respective body portion (12) to one or more posterior teeth, and a sleeve (81) having an open end (80) for receiving a respective one of the distal parts (79a) of the lingual bow (140); and
a pair of biasing members (82), wherein the biasing members (82) are arranged to bias the lingual bow (140) in an anterior direction when the lingual bow (140) is fitted to the support structure; and
**characterised in that** the biasing members (82) are housed within the sleeves (81) and wherein the biasing members (82) are removable through the open ends (80) of the sleeves (81) when the lingual bow (140) is removed from the support structure.

2. An appliance (100) according to Claim 1, wherein the biasing members (82) are retained in the sleeves (81) by the distal parts (79a) of the lingual bow (140).

3. An appliance (100) according to Claim 1 or Claim 2, wherein the sleeves (81) comprise closed ends (84) opposite the open ends (80).

4. An appliance (100) according to Claim 3, wherein each biasing member (82) is disposed between the closed end (84) of a respective sleeve (81) and an end of the respective distal part (79a) of the lingual bow (140).

5. An appliance (100) according to any preceding claim, wherein the distal parts (79a) of the lingual bow (140) extend in a first plane, and wherein the medial part (78) of the lingual bow (140) is spaced from the first plane in an incisal direction; and/or
wherein the distal parts (79a) of the lingual bow (140) comprise rods (79), and wherein each rod (79) is a sliding fit in the respective sleeve (81).

6. An appliance (100) according to any preceding Claim, wherein the body portions (12) are of moulded resin; or
wherein the body portions (12) are of moulded resin and the sleeves (81) are embedded in the body portions (12).

7. An appliance (100) according to any preceding claim, wherein the medial part (78) of the lingual bow (140) carries a lingual body (35) for engagement with the anterior teeth (T).

8. An appliance (100) according to any preceding claim, further comprising a labial bow (120) for engagement with one or more labial surfaces (L) of the anterior teeth (T).

9. An appliance (100) according to Claim 8, wherein the labial bow (120) is biased in a posterior direction.

10. An appliance (100) according to Claim 9, wherein the labial bow (120) comprises a pair of side members (75) that are supported by the support structure (12, 14), and a pair of further biasing members (25) for biasing the side members (75) in the posterior direction.

11. An appliance (100) according to Claim 10, wherein the further biasing members (25) are carried on the side members (75).

12. An appliance (100) according to Claim 11, wherein each side member (75) comprises a spacer (74) disposed between the further biasing member (25) and a posterior end of the side member (75).

13. An appliance (100) according to any of Claims 10 to 12, wherein the side members (75) are arranged to carry a medial part (124) of the labial bow (120) therebetween.

14. An appliance (100) according to Claim 13, wherein the medial part (124) of the labial bow (120) comprises a polymeric moulding and a reinforcing member that extends through the polymeric moulding; and/or
the medial part (124) of the labial bow (120) is substantially transparent.

15. An appliance (100) according to Claim 14, wherein the reinforcing member comprises:
a plurality of fibres; or
a plurality of fibres and a cord (77) in which the fibres are twisted together.

## Patentansprüche

1. Eine Vorrichtung (100) für die orthopädische Behandlung eines oder mehrerer Frontzähne im Kiefer eines Patienten, umfassend:
Einen herausnehmbaren Lingualbogen (140), der einen medialen Teil (78) für die Befestigung an einer lingualen Seite der Frontzähne (I) hat, und ein Paar distaler Teile (79a), die nach hinten von dem medialen Teil (78) verlaufen;
eine Stützstruktur (12, 14), die ein Paar seitliche gegenüberliegende Strukturteile (12) beinhaltet, jedes Strukturteil (12) bietet eine Verankerungsvorrichtung (16), um das jeweilige Strukturteil (12) an einem oder mehreren Seitenzähnen zu befestigen, und eine Hülse (81) mit einem offenen Ende (80) für die Aufnahme eines entsprechenden distalen Teils (79a) des Lingualbogens (140); und
ein Paar Vorspannelemente (82), wobei die Vorspannelemente (82) so angeordnet sind, dass der Lingualbogen (140) in vordere Richtung vorgespannt ist, wenn der Lingualbogen (140) in die Stützstruktur eingepasst wird; und
**gekennzeichnet dadurch, dass** die Vorspannelemente (82) in den Hülsen (81) untergebracht sind und wobei die Vorspannelemente (82) über die offenen Enden (80) der Hülsen (81) herausnehmbar sind, wenn der Lingualbogen (140) aus der Stützstruktur entnommen wird.

2. Eine Vorrichtung (100) nach Anspruch 1, wobei die Vorspannelemente (82) in den Hülsen (81) über die distalen Teile (79a) des Lingualbogens (140) gehalten werden.

3. Eine Vorrichtung (100) nach Anspruch 1 oder Anspruch 2, wobei die Hülsen (81) geschlossene Enden (84) umfassen, die den offenen Enden (80) gegenüberliegen.

4. Eine Vorrichtung (100) nach Anspruch 3, wobei jedes Vorspannteil (82) zwischen dem geschlossenen Ende (84) einer jeweiligen Hülse (81) und einem Ende des jeweiligen distalen Teils (79a) des Lingualbogens (140) angebracht ist.

5. Eine Vorrichtung (100) nach einem der vorhergehenden Ansprüche, wobei die distalen Teile (79a) des Lingualbogens (140) in einer ersten Ebene verlaufen, und wobei das mediale Teil (78) des Lingualbogens (140) in einer inzisalen Richtung von der ersten Ebene mit Abstand versehen verläuft; und/oder
wobei die distalen Teile (79a) des Lingualbogens (140) Stäbe (79) umfassen und wobei jeder Stab (79) eine Gleitpassung für die jeweilige Hülse (81) aufweist.

6. Eine Vorrichtung (100) nach einem der vorhergehenden Ansprüche, wobei die Strukturteile (12) aus Gießharz bestehen; oder
wobei die Strukturteile (12) aus Gießharz bestehen und die Hülsen (81) in die Strukturteile (12) eingebettet sind.

7. Eine Vorrichtung (100) nach einem der vorhergehenden Ansprüche, wobei der mediale Teil (78) des Lingualbogens (140) eine linguale Struktur (35) trägt, um ihn mit den Frontzähnen (T) zu verbinden.

8. Eine Vorrichtung (100) nach einem der vorhergehenden Ansprüche, ferner umfassend einen Labialbogen (120) für die Befestigung an einer oder mehreren labialen Oberflächen (L) der Frontzähne (T).

9. Eine Vorrichtung (100) nach Anspruch 8, wobei der Labialbogen (120) nach hinten vorgespannt ist.

10. Eine Vorrichtung (100) nach Anspruch 9, wobei der Labialbogen (120) ein Paar Seitenteile (75) umfasst, die von der Stützstruktur (12, 14) gehalten werden, und ein Paar weiterer Vorspannelemente (25) für das Vorspannen der Seitenteile (75) in hintere Richtung.

11. Eine Vorrichtung (100) nach Anspruch 10, wobei die weiteren Vorspannelemente (25) von den Seitenteilen (75) getragen werden.

12. Eine Vorrichtung (100) nach Anspruch 11, wobei jedes Seitenteil (75) einen Abstandshalter (74) umfasst, der zwischen dem weiteren Vorspannelement (25) und einem hinteren Ende des Seitenteils (75) angebracht ist.

13. Eine Vorrichtung (100) nach einem der Ansprüche 10 bis 12, wobei die Seitenteile (75) so angeordnet sind, dass sie ein mediales Teil (124) des Labialbogens (120) dazwischen tragen.

14. Eine Vorrichtung (100) nach Anspruch 13, wobei der mediale Teil (124) des Labialbogens (120) eine polymere Ausformung und ein Verstärkungsteil umfasst, das sich durch die polymere Ausformung erstreckt; und/oder
das mediale Teil (124) des Labialbogens (120) im Wesentlichen transparent ist.

15. Eine Vorrichtung (100) nach Anspruch 14, wobei das Verstärkungselement Folgendes umfasst:
eine Vielzahl von Fasern; oder
eine Vielzahl von Fasern und ein Band (77), in dem die Fasern miteinander verdrillt sind.

## Revendications

1. Appareil (100) destiné au traitement d'orthodontie d'une ou plusieurs dents antérieures dans la mâchoire d'un patient, comprenant :
un arc lingual amovible (140) présentant une partie médiane (78) destiné à une mise en contact avec un côté lingual des dents antérieures (I), et une paire de parties distales (79a) s'étendant en direction postérieure à partir de la partie médiane (78) ;
une structure de support (12, 14) dont une paire de parties corps opposées latéralement (12), chaque partie corps (12) étant fournie avec un dispositif d'ancrage (16) destiné à l'ancrage de la partie corps respective (12) à une ou plusieurs dents postérieures et un manchon (81) présentant une extrémité ouverte (80) destinée à recevoir une partie correspondante des parties distales (79a) de l'arc lingual (140) ; et
une paire d'éléments de sollicitation (82), les éléments de sollicitation (82) étant agencés de manière à solliciter l'arc lingual (140) dans une direction antérieure lorsque l'arc lingual (140) est monté sur la structure de support ; et
**caractérisé en ce que** les éléments de sollicitation (82) sont logés à l'intérieur des manchons (81) et les éléments de sollicitation (82) étant amovibles à travers les extrémités ouvertes (80) des manchons (81) lorsque l'arc lingual (140) est retiré de la structure de support.

2. Appareil (100) selon la revendication 1, dans lequel les éléments de sollicitation (82) sont retenus dans les manchons (81) par les parties distales (79a) de l'arc lingual (140).

3. Appareil (100) selon la revendication 1 ou la revendication 2, dans lequel les manchons (81) comprennent des extrémités fermées (84) opposées aux extrémités ouvertes (80).

4. Appareil (100) selon la revendication 3, dans lequel chaque élément de sollicitation (82) est disposé entre l'extrémité fermée (84) d'un manchon respectif (81) et une extrémité de la partie distale respective (79a) de l'arc lingual (140).

5. Appareil (100) selon une quelconque revendication précédente, dans lequel les parties distales (79a) de l'arc lingual (140) s'étendent dans un premier plan, et dans lequel la partie médiane (78) de l'arc lingual (140) est espacée du premier plan dans une direction incisale ; et/ou
dans lequel les parties distales (79a) de l'arc lingual (140) comprennent des tiges (79) et dans lequel chaque tige (79) est un montage coulissant dans le manchon respectif (81).

6. Appareil (100) selon une quelconque revendication précédente, dans lequel les parties corps (12) sont en résine moulée ; ou
dans lequel les parties corps (12) sont en résine moulée et les manchons (81) sont intégrés dans les parties corps (12).

7. Appareil (100) selon une quelconque revendication précédente, dans lequel la partie médiane (78) de l'arc lingual (140) porte un corps lingual (35) destiné à la mise en contact avec les dents antérieures (T).

8. Appareil (100) selon une quelconque revendication précédente, comprenant en outre un arc labial (120) destiné à la mise en contact avec une ou plusieurs surfaces labiales (L) des dents antérieures (T).

9. Appareil (100) selon la revendication 8, dans lequel l'arc labial (120) est sollicité dans une direction postérieure.

10. Appareil (100) selon la revendication 9, dans lequel l'arc labial (120) comprend une paire d'éléments latéraux (75) qui sont supportés par la structure de support (12, 14) et une paire d'éléments de sollicitation supplémentaires (25) destinés à solliciter les éléments latéraux (75) dans la direction postérieure.

11. Appareil (100) selon la revendication 10, dans lequel les éléments de sollicitation supplémentaires (25) sont portés sur les éléments latéraux (75).

12. Appareil (100) selon la revendication 11, dans lequel chaque élément latéral (75) comprend une entretoise (74) disposée entre l'élément de sollicitation supplémentaire (25) et une extrémité postérieure de l'élément latéral (75).

13. Appareil (100) selon l'une quelconque des revendications 10 à 12, dans lequel les éléments latéraux (75) sont agencés de manière à porter une partie médiane (124) de l'arc labial (120) entre elles.

14. Appareil (100) selon la revendication 13, dans lequel la partie médiane (124) de l'arc labial (120) comprend un moulage de polymère et un élément de renfort qui s'étend à travers le moulage de polymère ; et/ou
la partie médiane (124) de l'arc labial (120) est pratiquement transparente.

15. Appareil (100) selon la revendication 14, dans lequel l'élément de renfort comprend :
une pluralité de fibres; ou
une pluralité de fibres et un cordon (77) dans lequel les fibres sont torsadées ensemble.
